# FASCICULE DE BREVET EUROPEEN

(11) **EP 3 470 509 B1**
(45) Date de publication et mention de la délivrance du brevet: **22.07.2020**
(21) Numéro de dépôt: 18306194.4
(22) Date de dépôt: 13.09.2018
(51) Int. Cl.: C12G 1/08

(54) **PROCÉDÉ ET INSTALLATION DE REFROIDISSEMENT DU COL DE BOUTEILLES METTANT EN UVRE UN FLUIDE CALOPORTEUR SOLIDE**
VERFAHREN UND ANLAGE ZUM KÜHLEN DES HALSES VON FLASCHEN UNTER EINSATZ EINES FESTEN WÄRMEÜBERTRAGUNGSMITTELS
METHOD AND INSTALLATION FOR COOLING THE NECK OF BOTTLES USING A SOLID HEAT CARRIER FLUID

(30) Priorité: 11.10.2017 FR 1701056
(43) Date de publication de la demande: 17.04.2019
(73) Titulaire: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: COUSIN, Franck, 44250 SAINT BREVIN LES PINS (FR); GENSSE, Helene, 75007 PARIS (FR)
(74) Mandataire: Mellul-Bendelac, Sylvie Lisette

(56) Documents cités:
- EP-A1- 2 100 952
- WO-A1-95/19423
- FR-A1- 2 538 885
- FR-A1- 2 928 651
- FR-A1- 2 978 453
- FR-A1- 2 994 192

## Description

La présente invention concerne l'industrie viticole, et s'intéresse tout particulièrement aux procédés de refroidissement du col des bouteilles. Ces procédés sont mis en oeuvre dans le domaine de l'élaboration des vins selon la méthode dite « champenoise », pour préparer les bouteilles à l'opération dite « de dégorgement ».

Rappelons que la méthode champenoise consiste essentiellement à provoquer, après une première fermentation dite "alcoolique" en cuve, et éventuellement une deuxième fermentation dite "malolactique" en bouteille, une seconde, voire troisième, fermentation en ajoutant au vin des ferments qui vont lentement transformer le sucre en alcool et en gaz carbonique. Après une période de vieillissement, la fermentation produit un dépôt qui doit être évacué, ce qui est réalisé lors d'une l'opération dite « de dégorgement ».

Afin de laisser échapper le moins de vin possible lors de cette opération de dégorgement qui est réalisée bouteille à l'endroit, et d'éviter que le dépôt ne redescende dans la bouteille, selon une des méthodes pratiquées, on refroidit le col de la bouteille en l'immergeant dans un bain de liquide frigorigène jusqu'à la formation d'un glaçon renfermant les particules du dépôt, il suffit ensuite d'évacuer le glaçon qui renferme le dépôt, le vin évacué sous forme de glace étant ensuite remplacé.

Il existe à ce jour essentiellement un seul procédé pour réaliser mécaniquement la formation du glaçon dans une bouteille, et qui consiste à plonger le col des bouteilles dans un bain de saumure ou de glycol, comme cela est décrit dans les documents FR-2.578.037 et FR-2.854.450 par exemple. Ce procédé présente des inconvénients en ce sens que la manipulation du glycol est peu agréable, et que ce produit est peu compatible avec un environnement alimentaire.

Pour pallier ces inconvénients il a été proposé dans le document FR-2.538.885 d'utiliser un autre liquide frigorigène plus froid, à savoir de l'azote liquide, ceci afin notamment d'accélérer l'étape de refroidissement. L'utilisation de l'azote liquide présente toutefois un inconvénient majeur, celui de faire éclater les bouteilles de verres lorsqu'il vient au contact de celles-ci. Ainsi, la machine décrite dans ce document a très peu été utilisée en pratique.

D'autres travaux ont proposé d'utiliser un flux d'air, qui aura été préalablement refroidi, mais l'énergie nécessaire au refroidissement et la formation de givre sur la bouteille rendent cette solution peu satisfaisante.

Par ailleurs on a proposé d'utiliser des gels à très basse température, mais cette solution doit être suivie d'un nettoyage rigoureux des cols de bouteilles, ce qui constitue un inconvénient rédhibitoire. Le document FR-2.978.453 propose un dispositif de congélation de goulot de bouteille qui, d'une part, permet de refroidir le goulot de la bouteille pour former un glaçon en vue de l'opération de dégorgement et, d'autre part, ne met pas en contact le goulot avec le liquide réfrigéré. Pour ce faire, cette congélation s'effectue par une mise en contact du goulot de la bouteille avec des moyens de réfrigération, à l'intérieur desquels circule le fluide réfrigéré. L'invention utilise donc le phénomène de conduction thermique, mais sans mettre la bouteille directement en contact avec le fluide réfrigéré.

Un des objectifs de la présente invention est alors de proposer une nouvelle solution de refroidissement du col de bouteilles.

Comme on le verra plus en détails dans ce qui suit, on propose selon la présente invention d'utiliser un milieu caloporteur solide constitué de coupeaux métalliques (par exemple de la grenaille de cuivre d'environ 2 mm, mais des copeaux d'autres matériaux métalliques peuvent également être envisagés, ou encore d'autres solides ayant des propriétés de transfert thermiques intéressantes), que l'on refroidit avec un fluide cryogénique, par exemple de l'azote liquide, ou du CO₂ liquide, ou un mélange de tels fluides.

La mise en oeuvre d'un tel caloporteur solide offre une solution très intéressante puisqu'elle permet de résoudre les problématiques de nettoyage des bouteilles après l'opération de dégorgement, nettoyage qui était nécessaire dans certaines méthodes de l'art antérieur.

Le milieu caloporteur est refroidi par un cryogène, une régulation de la température du caloporteur permet de maitriser la température obtenue sur le col des bouteilles.

Ce système est par ailleurs parfaitement compatible avec les normes alimentaires et environnementales couramment pratiquées puisqu'on l'a dit il ne nécessite pas de nettoyer les bouteilles après la congélation des cols, et qu'il n'implique pas de rejet d'eaux usagées ou de produits polluants comme le glycol.

La présente invention concerne alors un procédé de refroidissement du col de bouteilles dans lequel le col des bouteilles, positionnées en position renversée, est immergé dans une masse d'un milieu caloporteur solide, par exemple de la grenaille de cuivre, masse que l'on refroidit à l'aide d'un fluide cryogénique, par exemple de l'azote liquide, ou encore du CO₂ liquide, ou un mélange de tels fluides.

Le procédé peut être mis en œuvre en continu, ou en mode « lot » (on dit aussi « batch ») : dans le cas du fonctionnement continu par exemple à l'aide d'un convoyeur, dans une structure qui peut être assimilée à un tunnel, et dans le cas du mode « lot » par exemple à l'aide d'une table tournante.

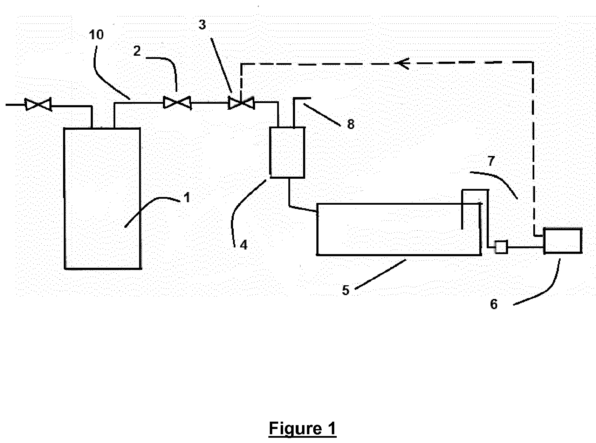

D'autres caractéristiques et avantages de la présente invention apparaîtront plus clairement dans la description suivante, donnée à titre illustratif mais nullement limitatif, faite en relation avec la figure 1 annexée qui est une vue schématique partielle d'une installation permettant la mise en œuvre de l'invention.

On reconnaît sur la figure 1 les éléments suivants :
- on dispose d'un stockage 1 de fluide cryogénique, par exemple ici de l'azote liquide, dont est issue une ligne 10 de distribution de fluide munie d'une vanne d'arrêt 2 et d'une électrovanne 3, pilotable par un régulateur 6 ;
- le fluide transite préférentiellement par un séparateur de phase 4, permettant de fournir vers l'aval un liquide substantiellement franc (limitant la proportion de phase gazeuse);
- le fluide issu du séparateur 4 alimente alors un bac 5 dans lequel est disposée une masse d'un milieu caloporteur solide, par exemple ici de la grenaille de cuivre, masse qui est refroidie par l'intervention du cryogène, par exemple par pulvérisation ;
- on dispose d'un système 7 de mesure de la température de la grenaille, ainsi que d'un système de régulation 6 permettant, selon le résultat de la mesure de température, de modifier (3) les conditions d'alimentation du bac en cryogène ;
- à titre illustratif, on peut envisager une sonde présente dans le bac, notamment quand le bac est suffisamment petit et qu'alors la température ainsi mesurée est représentative, on peut également envisager des bacs de taille plus importante où il est alors préférable de faire circuler la grenaille (par exemple à l'aide d'une vis sans fin couplée à un système vibrant).
- on fait alors transiter les bouteilles (par des moyens non représentés sur la figure, par exemple par un convoyeur dans une structure de type tunnel), positionnées en position renversée, pour que le col de chaque bouteille à refroidir soit immergé dans le milieu caloporteur solide refroidit durant un temps suffisant pour obtenir la congélation du dépôt qui doit être évacué («dégorgement »).

## Revendications

1. Procédé de refroidissement du col de bouteilles dans lequel le col des bouteilles, positionnées en position renversée, est immergé dans une masse (5) d'un milieu caloporteur solide constitué de copeaux métalliques, par exemple de la grenaille de cuivre, masse que l'on refroidit à l'aide d'un fluide cryogénique (1), par exemple de l'azote liquide, ou encore du CO₂ liquide, ou encore un mélange de tels fluides.

2. Procédé selon la revendication 1, **se caractérisant en ce que** l'on procède à une mesure de la température du milieu solide, et **en ce que** l'on modifie, selon le résultat de la mesure de température, les conditions d'alimentation en cryogène de la masse de milieu caloporteur solide.

3. Installation de refroidissement du col de bouteilles, qui comprend :
- une réserve d'un milieu caloporteur solide constitué de copeaux métalliques, par exemple de la grenaille de cuivre, contenue dans un bac (5) ;
- un stockage (1) de fluide cryogénique, par exemple de l'azote liquide ou du CO2 liquide ;
- une ligne (10) de distribution de fluide, connectée en sa partie amont audit stockage, et en sa partie aval audit bac, ligne munie d'une vanne de régulation (3) ;
- un régulateur (6), apte, à partir d'une mesure (7) de la température du milieu solide présent dans le bac, à rétroagir sur ladite vanne (3) de régulation ;
- des moyens permettant de faire transiter les bouteilles, positionnées en position renversée, pour amener le col de chaque bouteille à refroidir au sein du milieu caloporteur solide qui a été refroidit à l'aide dudit fluide cryogénique.

## Patentansprüche

1. Verfahren zur Kühlung eines Flaschenhalses, wobei der Hals von in umgekehrter Position positionierten Flaschen in eine Masse (5) eines festen Wärmeübertragungsmediums eingetaucht wird, das aus Metallspänen, beispielsweise Kupferschrot, besteht, wobei die Masse mittels eines kryogenen Fluids (1), beispielsweise flüssigem Stickstoff oder aber flüssigem CO₂ oder aber einer Mischung dieser Fluide, gekühlt wird.

2. Verfahren nach Anspruch 1, **dadurch gekennzeichnet, dass** eine Messung der Temperatur des festen Mediums durchgeführt wird, und dadurch, dass die Bedingungen der Zuführung des kryogenen Fluids zur Masse des festen Wärmeübertragungsmediums in Abhängigkeit von der Temperaturmessung geändert werden.

3. Einrichtung zur Kühlung eines Flaschenhalses, umfassend:
- einen Vorrat eines festen Wärmeübertragungsmediums, das aus Metallspänen, beispielsweise Kupferschrot, besteht, das in einem Behälter (5) enthalten ist;
- einen Speicher (1) von kryogenem Fluid, beispielsweise flüssigem Stickstoff oder flüssigem CO₂;
- eine Fluidverteilungsleitung (10), die an ihrem stromaufwärtigen Teil am Lager und an ihrem stromabwärtigen Teil am Behälter angeschlossen ist, wobei die Leitung mit einem Regelventil (3) versehen ist;
- einen Regler (6), der mittels einer Messung (7) der Temperatur des im Behälter vorhandenen festen Mediums dazu fähig ist, auf das Regelventil (3) rückzuwirken;
- Mittel, die ein Befördern der in umgekehrter Position positionierten Flaschen ermöglichen, um den Hals einer jeden zu kühlenden Flasche in das feste Wärmeübertragungsmedium zu führen, das mittels des kryogenen Fluids gekühlt worden ist.

## Claims

1. Method for cooling the neck of bottles, wherein the neck of the bottles, positioned in an upside down position, is immersed in a mass (5) of a solid heat carrier fluid medium constituted of metal chips, for example copper scrap, a mass that is cooled using a cryogenic fluid (1), for example liquid nitrogen, or liquid CO₂, or a mixture of such fluids.

2. Method according to claim 1, **characterised in that** a measurement of the temperature of the solid medium is taken, and **in that**, according to the result of the temperature measurement, the conditions for supplying the solid heat carried fluid medium mass with cryogen are modified.

3. Installation for cooling the neck of bottles, which comprises:
- a reserve of a solid heat carrier fluid medium constituted of metal chips, for example copper scrap, contained in a tank (5);
- a storage (1) of cryogenic fluid, for example liquid nitrogen or liquid CO₂;
- a line (10) for distributing fluid, connected in its upstream portion to said storage, and in its downstream portion with said tank, line provided with a regulation valve (3);
- a regulator (6), capable, from a measurement (7) of the temperature of the solid medium present in the tank, of retroacting on said regulation valve (3);
- means making it possible to have the bottle transited, positioned in an upside down position, to bring the neck of each bottle to be cooled within the solid heat transfer fluid medium which was cooled using said cryogenic fluid.
